(19) Europäisches Patentamt
European Patent Office
Office européen des brevets

(11) **EP 2 860 563 B1**

(12) **FASCICULE DE BREVET EUROPEEN**

(45) Date de publication et mention
de la délivrance du brevet:
**15.06.2016 Bulletin 2016/24**

(51) Int Cl.:
***G02B 7/182*** *(2006.01)*      ***G02B 7/183*** *(2006.01)*
***G02B 23/02*** *(2006.01)*      *G02B 26/06* *(2006.01)*

(21) Numéro de dépôt: **14187746.4**

(22) Date de dépôt: **06.10.2014**

(54) **Télescope spatial actif à miroir suspendu**

Aktives Weltraumteleskop mit einem abgehängten Spiegel

Active space telescope with a suspended mirror

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.10.2013 FR 1302361**

(43) Date de publication de la demande:
**15.04.2015 Bulletin 2015/16**

(73) Titulaire: **Thales**
**92200 Neuilly Sur Seine (FR)**

(72) Inventeurs:
• **Laborde, Cyrille**
**06270 Villeneuve Loubet (FR)**
• **Carte, Gilles**
**06400 Cannes (FR)**

(74) Mandataire: **Henriot, Marie-Pierre**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 0 121 470      EP-A1- 1 676 776**
**US-A1- 2009 078 850**

• **LABEQUE A ET AL: "DESIGN OF A SERVO-MECHANISM TO CONTROL THE POSITION OF A MIRROR IN A SPACE EXPERIMENT", SPACE SCIENCE INSTRUMENTATION, REIDEL PUBLISHING CO., DORDRECHT, NL, vol. 1, 1 janvier 1975 (1975-01-01), pages 419-437, XP000576307, ISSN: 0377-7936**

## Description

Le domaine de l'invention est celui des télescopes spatiaux actifs destinés à être embarqués à bord d'un satellite.

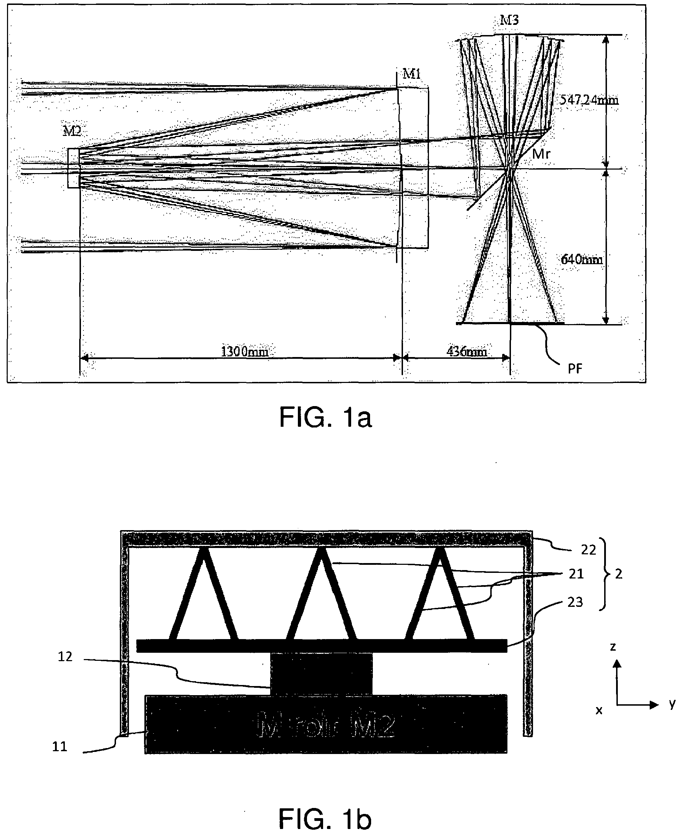

On rappelle qu'un télescope spatial comporte des éléments optiques tels que des miroirs. Un exemple de télescope spatial, de type Korsch est montré figure 1a, les distances entre miroirs étant également indiquées. Un miroir parabolique M1 percé, renvoie les rayons issus de l'infini vers le miroir plan M2 qui les réfléchit à travers l'ouverture pratiquée dans le miroir M1, sur un autre miroir parabolique M3 via un miroir de renvoi Mr. De M3 les rayons convergent sur un plan focal PF. Lorsque ces éléments M1, M2, M3 et Mr sont positionnés dans le télescope de manière fixe c'est-à-dire sans mécanisme d'asservissement en position en vol, on parle de télescope passif. Lorsqu'au moins un élément optique est associé à un mécanisme d'asservissement en position en vol, on parle de télescope actif. Dans la suite on considère un télescope actif avec au moins un miroir relié à un mécanisme d'asservissement, par exemple le miroir M2.

Le mécanisme d'asservissement du miroir a plusieurs degrés de liberté en rotation et/ou translation assurés au moyen d'actionneurs, le miroir étant fixé au mécanisme d'asservissement par un seul pied, comme montré figure 1b pour un miroir M2 (11) relié par un pied 12 à un mécanisme d'asservissement 2 qui comporte 5 degrés de liberté : 3 en translation selon respectivement les axes x, y et z, et 2 en rotation autour de l'axe y et autour de l'axe x. Le mécanisme d'asservissement 2 comporte des actionneurs 21 reliés d'une part au pied 12 à travers une plaque 23 et d'autre part au support 22 du mécanisme d'asservissement lui-même fixé à l'armature du télescope (non représentée).

Chaque miroir et plus particulièrement le miroir M2 qui est installé au sommet du télescope, est soumis à d'importantes accélérations lors du lancement du satellite à bord duquel il est embarqué. Cela nécessite un mécanisme d'asservissement apte à supporter des charges d'accélération importantes typiquement d'environ 1800 N (masse de 6kg du miroir M2 sous une accélération de 30g, g étant l'accélération terrestre) réparties sur l'ensemble des actionneurs.

Une solution consiste à développer des actionneurs linéaires supportant de fortes charges ; mais de tels actionneurs ne sont pas disponibles actuellement sur le marché. De tels actionneurs devront avoir une rigidité importante ce qui va augmenter la masse du mécanisme ; mais cela présente un inconvénient dans la mesure où cette surcharge est située dans une zone du satellite peu favorable à son agilité.

La publication EP 0 121 470 A1 décrit un télescope spatial actif particulièrement pertinent.

En conséquence, il demeure à ce jour un besoin pour un télescope spatial actif comportant au moins un miroir relié à un mécanisme d'asservissement, et donnant simultanément satisfaction à l'ensemble des exigences précitées, en termes de masse du mécanisme d'asservissement et d'utilisation d'actionneurs existants.

L'invention est basée sur l'installation d'un système de suspension entre le miroir et son mécanisme d'asservissement, assorti de butées élastiques.

Plus précisément l'invention a pour objet un télescope spatial actif destiné à être monté sur un satellite et comportant :

- au moins un miroir,
- un mécanisme d'asservissement du miroir selon au moins trois degrés de liberté qui comprend des actionneurs et un support relié aux actionneurs,
- une interface pour fixer le miroir au mécanisme d'asservissement.

Il est principalement caractérisé en ce que l'interface est un système de suspension de raideur prédéterminée qui autorise des débattements dynamiques du miroir par rapport au mécanisme d'asservissement, et en ce que le télescope comprend en outre des moyens pour limiter ces débattements dynamiques sous forme de butées élastiques et de moyens de coopération avec ces butées élastiques, quels que soient la direction et le sens desdits débattements.

Selon un premier mode de réalisation, les butées élastiques sont fixées au support du mécanisme d'asservissement, et le miroir comporte les moyens de coopération avec ces butées élastiques.

Selon un autre mode de réalisation, les butées élastiques sont fixées au miroir et le support du mécanisme d'asservissement comporte les moyens de coopération avec ces butées élastiques.

Ce système de suspension associé aux butées élastiques permet de réduire les charges appliquées au mécanisme d'asservissement tout en réduisant la masse de la zone du miroir, ce qui a un impact direct sur la masse du télescope, et tout en utilisant des actionneurs disponibles sur le marché.

Selon une caractéristique de l'invention, le système de suspension ayant une fréquence minimale déterminée en fonction de contraintes de contrôle d'attitude du satellite en vol, la raideur k est déterminée en fonction de cette fréquence minimale.

Le système de suspension comporte par exemple des ressorts métalliques ou des éléments de liaison souples en élastomère.

L'élasticité et l'amortissement des butées sont typiquement déterminés en fonction d'accélérations susceptibles d'être subies par le miroir.

Le télescope est par exemple de type Korsch ou Cassegrain ou TMA.

Le mécanisme d'asservissement comporte avantageusement des moyens de verrouillage du système de suspension notamment pour les tests du télescope au sol.

D'autres caractéristiques et avantages de l'invention apparaîtront à la lecture de la description détaillée qui suit, faite à titre d'exemple non limitatif et en référence aux dessins annexés dans lesquels :

la figure 1a déjà décrite représente schématiquement une configuration optique d'un télescope spatial actif selon l'état de la technique, la figure 1b représentant schématiquement plus en détail le mécanisme d'asservissement d'un miroir, en l'occurrence le miroir M2,

la figure 2 représente schématiquement un exemple de mécanisme d'asservissement d'un miroir d'un télescope spatial actif selon l'invention, en l'occurrence le miroir M2.

D'une figure à l'autre, les mêmes éléments sont repérés par les mêmes références.

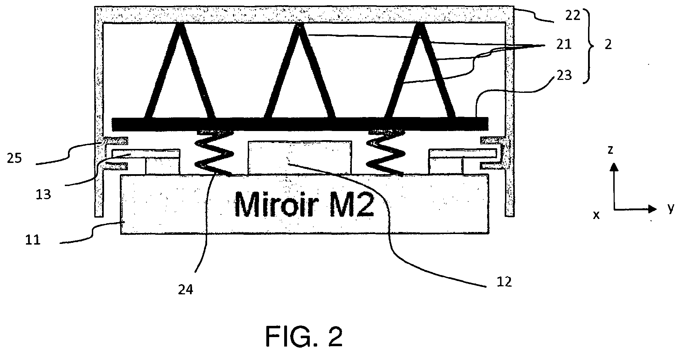

On décrit en relation avec la figure 2 un exemple de mécanisme d'asservissement d'un miroir de télescope spatial actif. Le miroir 11 est fixé au mécanisme d'asservissement 2 par une interface qui comporte un système de suspension de raideur prédéterminée qui autorise des débattements dynamiques du miroir 11 par rapport au mécanisme d'asservissement 2. Ce système de suspension comporte par exemple des ressorts métalliques 24 ou des éléments de liaison souples en élastomère.

Le télescope comprend en outre des moyens pour limiter ces débattements dynamiques sous forme de butées élastiques et de moyens de coopération avec ces butées élastiques.

Selon un premier mode de réalisation montré figure 2, ces butées élastiques 25 sont fixées au support 22 du mécanisme d'asservissement, et le miroir 11 comporte les moyens de coopération avec ces butées, tels que des tétons métalliques 13 venant s'engager dans l'espace défini par ces butées 25, ou des axes épaulés éventuellement démontables permettant de réaliser un accrochage avec les butées quels que soient la direction et le sens du déplacement relatif entre le miroir 11 et le support 22, c'est-à-dire quels que soient la direction et le sens des débattements dynamiques.

Selon un autre mode de réalisation, ces butées élastiques sont fixées au miroir et le support du mécanisme comporte les moyens de coopération avec ces butées. Bien sûr, cela permet également de réaliser un accrochage avec les butées quels que soient la direction et le sens du déplacement relatif entre le miroir 11 et le support 22, c'est-à-dire quels que soient la direction et le sens des débattements dynamiques.

L'interface est avantageusement équipée d'un dispositif de verrouillage, tel que le pied 12 rigide muni d'un dispositif d'accroche à la plaque 23, sans que les tétons métalliques 13 ne viennent en contact avec les butées 25 sous son propre poids. Au sol le système de suspension est alors verrouillé lors des mesures optiques des éléments optiques du télescope. La position du miroir en vol est définie par le mécanisme d'asservissement.

La raideur du système de suspension est typiquement prédéterminée en fonction de la masse M et de la fréquence f de l'ensemble suspendu (miroir+ressorts) qui est calée à une fréquence minimale vis-à-vis du Système de Contrôle d'Attitude en Orbite (ou AOCS acronyme de l'expression anglo-saxonne Attitude Orbital Control System), soit environ 10 Hz. M étant la masse de l'ensemble suspendu, on rappelle que la fréquence f est liée à la raideur k par la formule :

$$f = (1/2\pi).(k/M)^{1/2}$$

A une fréquence minimale de 10 Hz correspond donc une raideur minimale de suspension de l'ordre de 24 000 N/m, pour une masse M de 6 kg. Cette raideur peut aussi être déterminée expérimentalement.

Les butées élastiques 25 permettent de limiter le débattement dynamique, typiquement à $\pm$ 2,5 mm selon l'axe z se répartissant entre un jeu fonctionnel des butées compris entre 0,5 et 1 mm et une déformation élastique des butées comprise entre 1,5 et 2 mm. A ce débattement les ressorts 24 renvoient aux actionneurs 21 une charge :

$$F = k \cdot x,$$

k étant la raideur des ressorts de la suspension et x le débattement, soit 60 N aux actionneurs, à comparer à 1800 N sans système de suspension. L'élasticité de la suspension est déterminée en fonction d'accélérations susceptibles d'être subies par le miroir lors de sa mission opérationnelle. En vol, les accélérations maximales liées à l'agilité sont de l'ordre de $2°/s^2$ soit environ $0,007$ m/s$^2$ à 2m du centre de gravité correspondant à un débattement de 1,7 $\mu$m ce qui est dans l'ordre de grandeur de la stabilité habituelle. On peut augmenter la fréquence si nécessaire : par exemple 15 Hz permet de passer à un débattement de 0,8 $\mu$m.

L'élasticité et l'amortissement de la butée sont déterminés en fonction d'accélérations susceptibles d'être subies par le miroir 11 lors des essais de qualification au sol et lors du lancement du satellite embarquant le télescope actif. La raideur des butées est déterminée en relation avec les caractéristiques dynamiques du télescope actif et du satellite qui l'embarque pour éviter des couplages dynamiques et réduire les accélérations subies par le miroir 11 et les débattements dynamiques entre le miroir 11 et le support 22.

Ce système de suspension associé aux butées élastiques permet de réduire d'un facteur 30 les charges appliquées au mécanisme d'asservissement tout en réduisant la masse de la zone du miroir M2, ce qui a un impact direct sur la masse du télescope, et tout en utilisant des actionneurs disponibles sur le marché.

On a pris comme exemple le miroir M2 d'un télescope de type Korsch tel que décrit en préambule, mais l'invention s'applique bien sûr en considérant n'importe quel autre miroir asservi, qu'il s'agisse du miroir M1 ou M3 ou Mr ou plusieurs miroirs. Plus généralement elle s'applique à tout miroir de télescope spatial actif de type Cassegrain ou TMA acronyme de l'expression anglo-saxonne « Three Mirors Anastigmat », etc.

Le télescope ainsi équipé de ce mécanisme d'asservissement peut être monté horizontalement ou verticalement sur le satellite.

**Revendications**

1. Télescope spatial actif destiné à être monté sur un satellite et comportant :

    au moins un miroir (11),
    un mécanisme (2) d'asservissement du miroir selon au moins trois degrés de liberté qui comprend des actionneurs (21) et un support (22) fixé aux actionneurs,
    une interface pour fixer le miroir (11) au mécanisme d'asservissement (2),
    **caractérisé en ce que** l'interface est un système de suspension de raideur prédéterminée qui autorise des débattements dynamiques du miroir (11) par rapport au mécanisme d'asservissement (2), et **en ce que** le télescope comprend en outre des moyens pour limiter ces débattements dynamiques sous forme de butées élastiques (25) et de moyens de coopération (13) avec ces butées élastiques, quels que soient la direction et le sens des débattements dynamiques.

2. Télescope spatial actif selon la revendication précédente, **caractérisé en ce que** les butées élastiques (25) sont fixées au support (22) du mécanisme d'asservissement, et le miroir (11) comporte les moyens de coopération (13) avec ces butées élastiques (25).

3. Télescope spatial actif selon la revendication 1, **caractérisé en ce que** les butées élastiques (25) sont fixées au miroir (11) et **en ce que** le support (22) du mécanisme d'asservissement comporte les moyens de coopération (13) avec ces butées élastiques (25).

4. Télescope spatial actif selon l'une des revendications précédentes, **caractérisé en ce que** le système de suspension ayant une fréquence minimale déterminée en fonction de contraintes de contrôle d'attitude du satellite en vol, la raideur k est déterminée en fonction de cette fréquence minimale.

5. Télescope spatial actif selon l'une des revendications précédentes, **caractérisé en ce que** le système de suspension comporte des ressorts métalliques (24) ou des éléments de liaison souples en élastomère.

6. Télescope spatial actif selon l'une des revendications précédentes, **caractérisé en ce que** les butées présentent une élasticité et un amortissement déterminés en fonction d'accélérations susceptibles d'être subies par le miroir.

7. Télescope spatial actif selon l'une des revendications précédentes, **caractérisé en ce que** le télescope est de type Korsch ou Cassegrain ou TMA.

8. Télescope spatial actif selon l'une des revendications précédentes, **caractérisé en ce que** le mécanisme d'asservissement comporte des moyens de verrouillage (12) du système de suspension.

**Patentansprüche**

1. Aktives Weltraumteleskop zum Montieren an einem Satellit, das Folgendes umfasst:

    wenigstens einen Spiegel (11),
    einen Mechanismus (2) zum Steuern des Spiegels gemäß drei Freiheitsgraden, der Aktoren (21) und einen an den Aktoren befestigten Träger (22) umfasst,
    eine Schnittstelle zum Befestigen des Spiegels (11) an dem Steuermechanismus (2),
    **dadurch gekennzeichnet, dass** die Schnittstelle ein Aufhängungssystem mit einer vorbestimmten Starrheit ist, die dynamische Federungswege des Spiegels (11) in Bezug auf den Steuermechanismus (2) zulässt, und dadurch, dass der Spiegel darüber hinaus Mittel zum Begrenzen dieser dynamischen Federwege in Form von elastischen Anschlägen (25) und von Mitteln (13) zum Zusammenwirken mit diesen elastischen Anschlägen unabhängig von Richtung und Sinn der dynamischen Ausfederungen umfasst.

2. Aktives Weltraumteleskop nach dem vorherigen Anspruch, **dadurch gekennzeichnet, dass** die elastischen Anschläge (25) am Träger (22) des Steuermechanismus befestigt sind und der Spiegel (11) Mittel (13) zum Zusammenwirken mit diesen elastischen Anschlägen (25) umfasst.

3. Aktives Weltraumteleskop nach Anspruch 1, **dadurch gekennzeichnet, dass** die elastischen Anschläge (25) an dem Spiegel (11) befestigt sind, und dadurch, dass der Träger (22) des Steuermechanismus Mittel (13) zum Zusammenwirken mit diesen elastischen Anschlägen (25) umfasst.

**4.** Aktives Weltraumteleskop nach einem der vorherigen Ansprüche, **dadurch gekennzeichnet, dass** das Aufhängungssystem eine Minimalfrequenz hat, bestimmt in Abhängigkeit von Lageregelbegrenzungen des Satelliten beim Flug, wobei die Starrheit k in Abhängigkeit von dieser Minimalfrequenz bestimmt wird.

**5.** Aktives Weltraumteleskop nach einem der vorherigen Ansprüche, **dadurch gekennzeichnet, dass** das Aufhängungssystem metallische Federn (24) oder elastische Verbindungselemente aus Elastomer umfasst.

**6.** Aktives Weltraumteleskop nach einem der vorherigen Ansprüche, **dadurch gekennzeichnet, dass** die Anschläge eine Elastizität und eine Dämpfung aufweisen, die in Abhängigkeit von Beschleunigungen bestimmt werden, denen sie wahrscheinlich durch den Spiegel ausgesetzt werden.

**7.** Aktives Weltraumteleskop nach einem der vorherigen Ansprüche, **dadurch gekennzeichnet, dass** das Teleskop vom Typ Korsch oder Cassegrain oder TMA ist.

**8.** Aktives Weltraumteleskop nach einem der vorherigen Ansprüche, **dadurch gekennzeichnet, dass** der Steuermechanismus Mittel (12) zum Verriegeln des Aufhängungssystems umfasst.


**Claims**

**1.** Active space telescope which is intended to be mounted on a satellite and which comprises:

> at least one mirror (11),
> a mechanism (2) which is for controlling the mirror in accordance with at least three degrees of freedom and which comprises actuators (21) and a support (22) which is fixed to the actuators,
> an interface for fixing the mirror (11) to the control mechanism (2),
> **characterised in that** the interface is a suspension system having a predetermined rigidity which enables dynamic movements of the mirror (11) relative to the control mechanism (2), and **in that** the telescope further comprises means for limiting these dynamic movements in the form of resilient stops (25) and means (13) for cooperating with these resilient stops, regardless of the direction and the sense of the dynamic movements.

**2.** Active space telescope according to the preceding claim, **characterised in that** the resilient stops (25) are fixed to the support (22) of the control mechanism, and the mirror (11) comprises means (13) for cooperating with these resilient stops (25).

**3.** Active space telescope according to claim 1, **characterised in that** the resilient stops (25) are fixed to the mirror (11) and **in that** the support (22) of the control mechanism comprises means (13) for cooperating with these resilient stops (25).

**4.** Active space telescope according to any one of the preceding claims, **characterised in that**, the suspension system having a minimum frequency determined in accordance with restrictions for control of the attitude of the satellite during flight, the rigidity k is determined in accordance with that minimum frequency.

**5.** Active space telescope according to any one of the preceding claims, **characterised in that** the suspension system comprises metal springs (24) or flexible connection elements of elastomer material.

**6.** Active space telescope according to any one of the preceding claims, **characterised in that** the stops have a resilience and a damping which are determined in accordance with accelerations to which the mirror may be subjected.

**7.** Active space telescope according to any one of the preceding claims, **characterised in that** the telescope is of the Korsch, Cassegrain or TMA type.

**8.** Active space telescope according to any one of the preceding claims, **characterised in that** the control mechanism comprises locking means (12) for the suspension system.

FIG. 1a

FIG. 1b

FIG. 2

**EP 2 860 563 B1**

**RÉFÉRENCES CITÉES DANS LA DESCRIPTION**

**Documents brevets cités dans la description**

- EP 0121470 A1